# EUROPEAN PATENT SPECIFICATION

(11) **EP 1 873 473 B1**
(45) Date of publication and mention of the grant of the patent: **31.08.2011**
(21) Application number: 07110346.9
(22) Date of filing: 15.06.2007
(51) Int. Cl.: F41B 7/04

(54) **Device for locking the front end of the spear shaft in a fishing gun for scuba divers**
Vorrichtung zum Festhalten der Speerspitze eines Fischgewehrs für Gerätetaucher
Dispositif pour le blocage de l'extrémité avant de la pointe d'un harpon pour plongeurs

(30) Priority: 30.06.2006 IT FI20060040 U
(43) Date of publication of application: 02.01.2008
(73) Proprietor: Cressi-Sub S.p.A., 16165 Genova (IT)
(72) Inventor: Pedemonte, Stefano, 16164 Genova (IT)
(74) Representative: Bardini, Marco Luigi

(56) References cited:
- FR-A1- 2 241 245
- FR-A1- 2 267 535
- FR-A3- 2 798 188

## Description

The present invention generally relates to the field of spear guns for fishing and underwater hunting and particularly concerns a device for locking the front end of a spear shaft in a fishing gun for scuba divers.

There are various known devices for holding the front end of the spear shaft in position on the distal end of a fishing gun for scuba divers until the trigger is pulled and the spear is released and launched towards the prey.

In one such known device, the distal end of the gun is fitted with a fixed bridge defining an axial seat in which the spear shaft engages, remaining in position until the gun is fired, despite any movement by the scuba diver. In this type of device, there is also a metal bar in the form of an arch, conventionally called the nosepiece, attached to the distal end of the gun, the substantially U-shaped arch having its open end facing the proximal end of the gun. The arch can rotate freely around the distal end of the gun and its two arms are attached to the ends of an elastic cable, generally made of rubber, which is first tensioned and then released to launch the spear shaft. Since the two ends of the elastic cable are fixed to the arms of the nosepiece, which is free to rotate around the distal end of the gun, when the elastic cable is released, it can rise away from the gun, and thus avoids obstructing the sliding movement of the spear shaft.

This first conventional system has the disadvantage of allowing the spear shaft some degree of slack inside the above-mentioned bridge, which prevents the scuba diver from taking an accurate aim.

A simplified version of the previous solution involves having the bridge at the distal end of the gun, while the ends of the elastic cable are connected directly, in a fixed position, to either side of the distal end of the gun.

Such a fishing gun is described in FR 2 798 188 A3, which forms the starting point for independent claim 1.

In another known device of this type, no bridge is used and the front end of the spear shaft is held in position by the rope attached to the spear, which passes crosswise over the spear shaft, holding it against the end of the gun. The structural simplification involved in this solution is countered by the scuba diver having to adopt a more complicated procedure to load the gun.

In short, according to the known solutions, when there is a bridge, which facilitates the procedure for loading the spear, the end of the shaft is held in place by the bridge with an unavoidable degree of slack that reduces the accuracy of the scuba diver's aim if the diver changes position. On the other hand, eliminating the nosepiece makes it more complicated to load the spear.

The object of the present invention is to provide a fishing gun for scuba divers comprising a device for locking the front end of a spear shaft that enables the above-mentioned drawbacks to be overcome.

According to one aspect of the invention, the locking device for the front end of the spear shaft in a fishing gun for scuba divers comprises a bridge-shaped element extending crosswise over the distal end of the gun and a substantially U-shaped nosepiece connected to the distal end so that it can revolve around a crosswise axis. The nosepiece comprises two arms which are respectively connected to the ends of an elastic cable that can be tensioned against the rear end of the shaft, which is placed on a supporting surface lying along the body of the gun. The ends of the elastic cable are integrally attached to the bridge element, which is situated at a distance from the supporting surface such that it holds the shaft against said surface when the spear is in the loaded position in the gun.

The invention is explained in more detail in the following description of an embodiment thereof, provided as a non-limiting example, with reference to the attached drawings, wherein:
- figure 1 is a schematic side view of the distal end of the fishing gun for scuba divers complete with the locking device according to the invention;
- figure 2 is a longitudinal section of the distal end of the gun shown in figure 1;
- figure 3 is a front view in the direction of the arrow F shown in figure 1;
- figure 4 is a front view as in figure 3, but immediately after firing the gun, before the spear has become detached from the gun.

### Detailed description of the invention

With reference to the above figures, the numeral 1 schematically indicates the distal end of a fishing gun for scuba divers and 2 indicates the shaft of a spear mounted thereon; the numeral 3 indicates one of the two ends of an elastic cable C extending along the body of the gun that is tensioned by engaging it on a tooth provided for said purpose on the rear portion of the shaft 2. By means of a bushing 4, each of the ends 3 of the elastic cable C is axially connected to an arm 5a of a nosepiece 5 comprising a slender metal arch revolvingly attached crosswise to the distal end 1 of the gun.

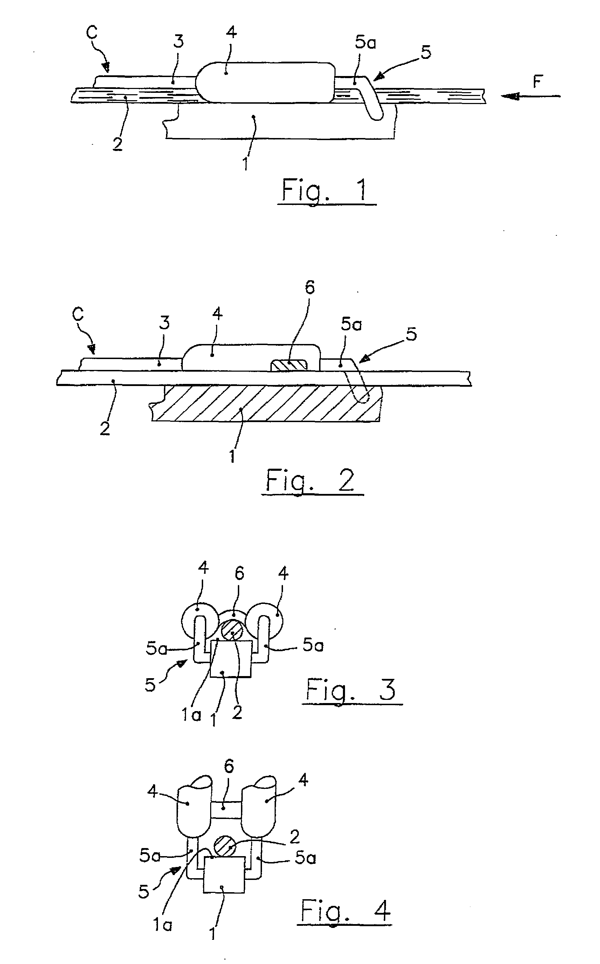

A bridge 6 is integrally attached in a crosswise position between the two bushings 4. The distance of the bridge 6 from the surface 1a for supporting the shaft 2 at the distal end 1 is such that, when the spear is in the loaded position in the gun, the bridge 6 holds the shaft 1 against the gun, preventing any movement of the shaft. In other words, the distance between the bridge 6 and the supporting surface 1a is essentially equal to the diameter of the shaft 2, so that when the spear is in the loaded position, the underside of the bridge 6 rests against the shaft 2, holding it in position against the supporting surface 1a of the gun even if the scuba diver moves prior to firing the gun (see figure 3). When the gun is fired, the elastic cable C lifts away, together with the bushings 4 attached to its ends and the bridge 6 integrally connected thereto. As shown in figure 4, when the bridge 6 is lifted away, it releases the spear shaft 2, which is consequently launched unobstructed towards the prey.

From the above description, it is clear that the invention, which consists in the bridge being integrally to the nosepiece so that they rotate together when the previously tensioned elastic cable is released, fully achieves the previously-stated objects. In fact, this rotation increases the cross-section of the space where the spear shaft passes, thus allowing it to slide freely when it is fired; when in the loaded position, on the other hand, the bridge abuts against the spear shaft, thereby retaining it in a fixed position even if the scuba diver moves prior to firing the gun.

Various modifications and alterations to the invention may be appreciated based on a review of the disclosure. These changes and additions are intended to be within the scope of the invention as defined by the following claims.

## Claims

1. A fishing gun (1) for scuba divers comprising a device for locking the front end of a spear shaft (2), said device comprising a bridge-shaped element (6) extending crosswise over the distal end of the gun and a substantially U-shaped nosepiece (5) connected to said distal end and revolving freely around a crosswise axis thereof, said nosepiece comprising two arms (5a) respectively connected to the ends (3) of an elastic cable (c) that is tensioned against the rear end of said shaft, which is placed on a supporting surface (1a) lying along the body of said gun (1), **characterized in that** said bridge element (6) is integrally attached to the ends (3) of said elastic cable (c) and is situated at a distance from said supporting surface (1a) such that it retains said shaft (2) against said surface when the spear is in the loaded position.

2. The fishing gun according to claim 1, wherein the ends (3) of said elastic cable (c) are connected to corresponding terminal bushings (4) integrally attached to the arms (5a) of said nosepiece (5), said bridge element (6) being fixed to said bushings (4) and extending crosswise from one to the other.

3. The fishing gun according to claims 1 or 2, wherein the distance of said bridge element (6) from said supporting surface (1a) is essentially the same as the diameter of said shaft (2).

## Patentansprüche

1. Harpunengeschütz (1) für Gerätetaucher, enthaltend eine Vorrichtung zum Verriegeln des vorderen Endes eines Speerschaftes (2), wobei die Vorrichtung ein brückenförmiges Element (6), das sich überkreuz über das distale Ende des Geschützes erstreckt, und ein im wesentlichen U-förmiges Nasenstück (5) enthält, das mit dem distalen Ende verbunden ist und sich frei um eine gekreuzte Achse davon dreht, wobei das Nasenstück zwei Arme (5a) enthält, die entsprechend mit den Enden (3) eines elastischen Kabels (c) verbunden sind, das gegen das hintere Ende des Schaftes gespannt ist, der auf einer Halteoberfläche (1a) angeordnet ist, die längs des Körpers des Geschützes liegt, **dadurch gekennzeichnet, dass** das Brückenelement (6) integral an den Enden (3) des elastischen Kabels (c) angebracht ist und in einem Abstand von der Halteoberfläche (1a) liegt, so dass es den Schaft (2) gegen die Oberfläche zurück hält, wenn der Speer in der geladenen Position ist.

2. Harpunengeschütz nach Anspruch 1, wobei die Enden (3) des elastischen Kabels (c) mit entsprechenden Abschlusshülsen (4) verbunden sind, die integral an den Armen (5a) des Nasenstücks (5) angebracht sind, wobei das Brückenelement (6) an den Hülsen (4) fixiert ist und sich überkreuz von einer zur anderen erstreckt.

3. Harpunengeschütz nach Anspruch 1 oder 2, wobei der Abstand des Brückenelements (6) von der Halteoberfläche (1a) im Wesentlichen derselbe wie der Durchmesser des Schaftes (2) ist.

## Revendications

1. Un fusil de chasse sous-marine (1) pour des plongeurs autonomes comportant un dispositif pour bloquer l'extrémité avant d'une tige de harpon (2), ledit dispositif comprenant un élément en forme de pont (6) s'étendant en travers au-dessus de l'extrémité distale du fusil et une pièce en saillie sensiblement en forme de U (5) reliée à ladite extrémité distale et pivotant librement autour d'un axe transversal de cette dernière, ladite pièce en saillie comprenant deux bras (5a) respectivement reliés aux extrémités (3) d'un câble élastique (c) qui est mis en tension contre l'extrémité arrière de ladite tige, qui est positionnée sur une surface support (1a) s'étendant le long du corps du dit fusil (1), **caractérisé en ce que** ledit l'élément en forme de pont (6) est solidarisé avec les extrémités (3) du dit câble élastique (c) et est situé à une distance de ladite surface support (1a) de façon qu'il retienne ladite tige (2) contre ladite surface quand le harpon est en position armée.

2. Le fusil de chasse sous-marine selon la revendication 1, où les extrémités (3) du dit câble élastique (c) sont reliées à des bagues terminales correspondantes (4) solidaires des bras (5a) de ladite pièce en saillie (5), ledit élément en forme de pont (6) étant fixé aux dites bagues (4) et s'étendant transversalement de l'une à l'autre.

3. Le fusil de chasse sous-marine selon l'une des revendications 1 et 2, où la distance séparant ledit élément en forme de pont (6) de ladite surface support (1a) est sensiblement égale au diamètre de ladite tige (2).
